# EUROPEAN PATENT APPLICATION

(11) **EP 3 629 668 A1**
(43) Date of publication of application: **01.04.2020**
(21) Application number: 18197331.4
(22) Date of filing: 27.09.2018
(51) Int. Cl.: H04W 76/10

(54) **RADIO COMMUNICATION SYSTEM AS WELL AS METHOD FOR DETERMINING A RADIO FREQUENCY CHARACTERISTIC**

(71) Applicant: Rohde & Schwarz GmbH & Co. KG, 81671 München (DE)
(72) Inventor: BAYER, Stefan, 81671 München (DE); EBERL, Peter, 81671 München (DE)
(74) Representative: Prinz & Partner mbB

(57) **Abstract**

A radio communication system (10) is described, comprising at least a first radio (12) and a second radio (14), both radios (12, 14) being configured to communicate with each other. The radio communication system (10) has a transmit mode in which an initial signal pattern (16) is transmitted at the beginning of each communication via the first radio (12). The radio communication system (10) has a receive mode in which the initial signal pattern (16) is received by the second radio (14). The second radio (14) is configured to derive at least one communication channel parameter and a radio frequency characteristic from the initial signal pattern (16). Further, a method for determining a radio frequency characteristic is described.

## Description

The invention relates to a radio communication system. Further, the invention relates to a method for determining a radio frequency characteristic of a signal to be used for communication in a radio communication system.

Nowadays, radio frequency communication is based on new radio frequency waveforms with different bandwidths. Such radio frequency signals relate inter alia to a standard defined in MIL-STD-188-110C, for instance. MIL-STD-188-110C comprises a family of wideband high frequency data waveforms supporting bandwidths from 3 kHz to 24 kHz in increments of 3 kHz. However, the user of the radio communication system, in particular of a receiver, has to know the respective bandwidth of the radio frequency signal transmitted by a transmitter of the radio communication system a priori so as to adapt the receiving parameters of the receiver appropriately. Thus, the receiver is enabled to receive and process the radio frequency signal transmitted by the transmitter.

To overcome this issue that the user of the receiver has to know the bandwidth of the radio frequency signals transmitted by the transmitter a priori, an additional protocol is used in the prior art. This additional protocol is also called automatic link establishment (ALE) protocol as the protocol provides the respective information with regard to the parameters used by the transmitter for transmitting the radio frequency signal such as the bandwidth. Hence, the receiver is enabled to receive the information to be used for adapting its settings or rather its receiving parameters appropriately. However, the automatic link establishment (ALE) protocols known so far are proprietary which means that it is not possible to use the respective protocol while communicating between radios provided by different manufacturers due to the proprietary automatic link establishment (ALE) protocols. In other words, a priori knowledge is still required provided that interoperable radios of different manufactures shall be used for establishing the communication via signals having radio frequency waveforms with different bandwidths.

Accordingly, there is a need for an easy and interoperable possibility to establish a radio communication without a priori knowledge of the transmitting parameters.

The invention provides a radio communication system, comprising at least a first radio and a second radio, both radios being configured to communicate with each other, wherein the radio communication system has a transmit mode in which an initial signal pattern is transmitted at the beginning of each communication via the first radio, wherein the radio communication system has a receive mode in which the initial signal pattern is received by the second radio, and wherein the second radio is configured to derive at least one communication channel parameter and a radio frequency characteristic from the initial signal pattern.

Further, the invention provides a method for determining a radio frequency characteristic of a signal to be used for communication in a radio communication system, with the following steps:
- Transmitting via a first radio of the radio communication system an initial signal pattern at the beginning of each communication,
- Receiving the initial signal pattern via a second radio of the radio communication system,
- Processing the initial signal pattern received by the second radio, and
- Determining at least one communication channel parameter and a radio frequency characteristic from the initial signal pattern transmitted.

Accordingly, it is possible to obtain information with regard to the transmitter without any a priori knowledge since the transmitter transmits at the beginning of each communication an initial signal pattern that is analyzed by the receiver. This enables the receiver to determine at least the radio frequency characteristic as well as the communication channel parameter from the initial signal pattern.

The radio frequency characteristic derived from the initial signal pattern is assigned to a radio frequency characteristic of the signal to be used for the communication in the radio communication system. Thus, the respective information with regard to the radio frequency characteristic of the signal to be used for the communication is derived from the radio frequency characteristic determined from the initial signal pattern received.

Accordingly, the information that, in the state of the art, was assigned to the a priori knowledge of the user of the receiving radio, namely the second radio, is now transmitted by using the initial signal pattern. Since the initial signal pattern is used for transmitting the information instead of a protocol such as an automatic link establishment (ALE) protocol, the information may be transmitted to a receiving radio, namely the second radio, being manufactured by another manufacturer than the one of the first radio, namely the transmitting radio. In other words, the initial signal pattern may be received and processed by non-proprietary radio(s) or rather interoperable radios.

Generally, the communication channel parameter derived from the initial signal pattern may be estimated. For instance, the communication channel parameter may relate to path loss, Doppler spread, Doppler frequency, channel coherence time, channel delay spread, channel coherence bandwidth and/or angular spread.

The radio frequency characteristic derived from the initial signal pattern may relate to a characteristic of the respective waveform of the initial signal pattern, for instance wavelength, frequency and/or shape.

According to an aspect, the second radio is configured to adjust its receiving parameters based on the radio frequency characteristic and/or the at least one communication channel parameter derived from the initial signal pattern. Thus, the second radio that receives the initial signal pattern, namely the receiving radio, is configured to adapt its internal settings, namely its receiving parameters, so that it is set for receiving the respective radio frequency signal used by the transmitter. In other words, the second radio is configured to perform an automatic self-adjustment with regard to its settings (auto-setting) based on the initial signal pattern received from the first radio, namely the transmitting radio. Hence, the respective information obtained from the initial signal pattern can be used by the receiving radio, namely the second radio, so as to obtain information with regard to the characteristic of the signal used for communication by the transmitting radio, namely the first radio.

According to another aspect, the transmit mode comprises an initialization sub-mode in which the initial signal pattern is transmitted and a content sub-mode in which content is transmitted. In other words, the initial signal pattern is transmitted prior to transmitting content so that the initial signal pattern is used for initializing the communication enabling the radios to exchange content, in particular enabling the second radio to receive content from the first radio. Thus, the initial signal pattern is transmitted in the initialization sub-mode that takes place prior to the content sub-mode which is activated once the initialization of the radio communication system has been completed. Put another way, the initial signal pattern is assigned to an initialization of the communication between both radios, namely the radio communication system. Since the receiving radio, namely the second radio, obtains the respective information with regard to the transmitter from the initial signal pattern, the communication between both radios can be established as the second radio, namely the receiving radio, automatically adapts its setting or rather receiving parameters with regard to the parameters of the transmitting radio, namely the first radio, so that the communication can be established or rather initialized at the beginning of the communication between both radios.

The radio frequency characteristic derived from the initial signal pattern may be different to content. This means that the radio frequency characteristic derived from the initial signal pattern and used for adapting or rather adjusting the receiving parameters of the second radio is different to a content that may be transmitted. Hence, the waveform of the initial signal pattern or any other characteristic observable is used for providing the information so that no a priori knowledge is necessary. However, the initial signal pattern is not processed so as to derive at a content of the initial signal pattern, in particularly contrary to a protocol.

Furthermore, the radio frequency characteristic derived from the initial signal pattern transmitted may be assigned to a signal bandwidth. Thus, the second radio, namely the receiving radio, is enabled to obtain information with regard to the signal bandwidth from the radio frequency characteristic of the initial signal pattern.

Particularly, the signal bandwidth derived from the initial signal pattern corresponds to a signal bandwidth of a signal to be used for communication. This means that the second radio, namely the receiving radio, obtains the information with regard to the bandwidth of the signal used by the transmitting radio for communication purposes. Hence, the respective receiving parameters of the receiving radio, namely the second radio, can be adapted in the initialization phase so as to ensure that the radio frequency signals used by the transmitter or rather the transmitting radio can be received in an appropriate manner.

In other words, the radio frequency characteristic determined from the initial signal pattern transmitted is assigned to a signal bandwidth, in particular a signal bandwidth of a signal to be used for communication.

Moreover, the second radio may also be configured to derive a content from the initial signal pattern. Thus, the initial signal pattern may also be used to transmit or rather exchange content.

According to another aspect, at least the second radio is configured to analyze a waveform of the initial signal pattern. For instance, the waveform of the initial signal pattern may be analyzed by the second radio, namely the receiving radio, for deriving inter alia the radio frequency characteristic from the initial signal pattern such as wavelength, frequency and/or shape.

Generally, at least one of both radios may comprise a software-defined waveform platform. The software-defined waveform platform may be a software-defined waveform generation platform. Accordingly, different waveforms can be used for generating the initial signal pattern so as to provide the respective information with regard to the bandwidth of the signal intended to be used by the transmitting radio for communication.

Moreover, at least one of both radios may be enabled to be operated in the transmit mode and the receive mode. Moreover, both radio may be enabled to be operated in both modes so that the communication may be reversed between both radios.

For instance, at least one of both radios is a transceiver so that the respective radio is enabled to transmit and to receive signals.

Generally, the radio communication system is configured to automatically detect a signal bandwidth of a signal to be used for communication based on the initial signal pattern. Thus, no a priori knowledge is necessary. The initial signal pattern is used in an initialization sub-mode so as to initialize the communication between the radios of the radio communication system. Accordingly, information with regard to the bandwidth used by the transmitting radio, namely the first radio, is forwarded to the receiving radio, namely the second radio, by the initial signal pattern so that it is not necessary that the user of the second radio has a priori knowledge of the bandwidth used by the transmitting radio, namely the first radio. Furthermore, complex and proprietary protocols like automatic link establishment (ALE) protocols are not necessary since the respective information with regard to the transmitting parameters such as the bandwidth is forwarded via the initial signal pattern transmitted by the first radio at the beginning of each communication. In other words, the signal bandwidth of a signal to be used for communication is automatically detected by processing the initial signal pattern.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an overview of a radio communication system according to the present disclosure, and
- Figure 2 schematically shows a flow-chart of a method for detecting a radio frequency characteristic.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

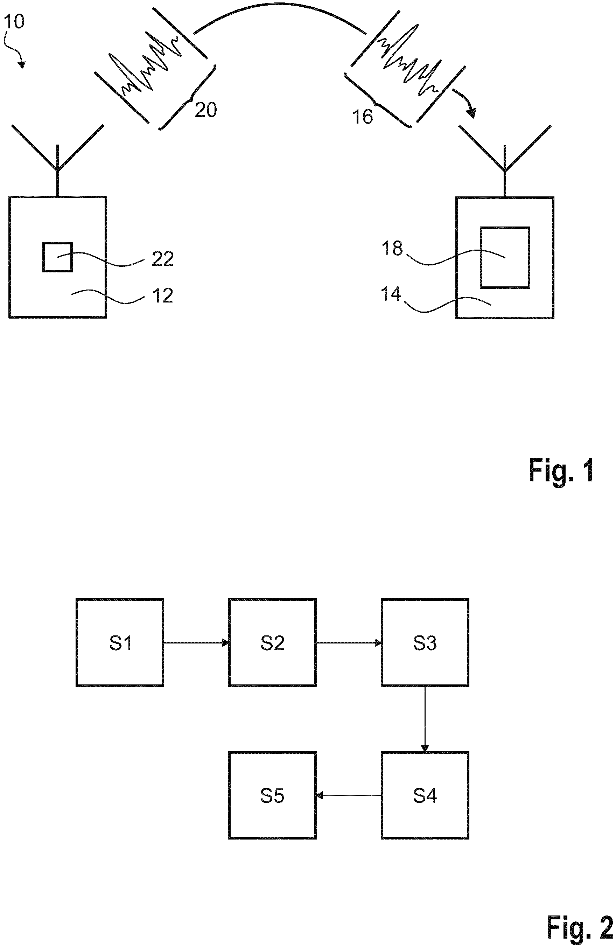

In Figure 1, a radio communication system 10 is shown that comprises a first radio 12 and a second radio 14. In the shown embodiment, the first radio 12 is a transmitting radio, also called transmitter, whereas the second radio 14 is a receiving radio, also called receiver.

However, both radios 12, 14 may be established by transceivers so that both radios 12, 14 may correspond to a transmitter or rather a receiver depending on the respective operation mode of the radio communication system 10 or rather the respective application.

In general, both radios 12, 14 are configured to communicate with each other wherein radio frequency signals are used for the communication.

In fact, the radio frequency signals used may have different bandwidths so that the respective information with regard to the bandwidth used by the transmitting radio, namely the first radio 12, has to be obtained prior to establishing a communication between both radios 12, 14.

The radio communication system 10 is generally configured to perform a method for determining a radio frequency characteristic that is illustrated in the flow-chart of Figure 2 to which reference is also made hereinafter.

The radio communication system 10 has a transmit mode in which an initial signal pattern 16 is transmitted via the first radio 12 at the beginning of each communication in a first step S1.

The initial signal pattern 16 transmitted is received by the second radio 14 in a received mode of the radio communication system 10 wherein the receiving of the initial signal pattern 16 is assigned to a second step S2.

The second radio 14 of the radio communication system 10 that has received the initial signal pattern 16 is configured to process the initial signal pattern 16 in a third step S3. For this purpose, the second radio 14 has a processing unit 18.

After processing the initial signal pattern 16 received, the second radio 14 may determine at least one communication channel parameter and at least one radio frequency characteristic from the initial signal pattern 16 in a fourth step S4.

In other words, the second radio 14 is configured to derive the at least one communication channel parameter and/or the radio frequency characteristic from the initial signal pattern 16 that has been transmitted by the first radio 12 in the transmit mode.

The at least one communication channel parameter and the radio frequency characteristic is determined or rather estimated by the processing unit 18 that processes the initial signal pattern 16 received appropriately.

In a fifth step S5, the second radio 14 may adapt or rather adjust its receiving parameters based on the at least one communication channel parameter and/or the radio frequency characteristic derived from the initial signal pattern 16 previously. Thus, the second radio 14 self-adjusts or rather sets its receiving parameters automatically based on the information received during the initialization sub-mode due to the initial signal pattern 16 received. In other words, at least the second radio 14 has an auto-setting function for automatically adapting its settings or rather its receiving parameters in dependency of the initial signal pattern 16 received.

The radio frequency characteristic derived from the initial signal pattern 16 is assigned to a signal bandwidth, in particular a signal bandwidth of a signal intended to be used by the first radio 12, namely the transmitting radio, for communicating. In fact, the radio frequency characteristic is assigned to the signal bandwidth of the radio frequency signal to be used for communication.

This means that the second radio 14, namely the receiving radio, self-adjusts or rather auto-sets its receiving parameters with respect to the signal bandwidth used by the transmitting radio, namely the first radio 12.

Therefore, it is ensured that the receiving radio, namely the second radio 14, is automatically set in an appropriate manner for receiving the respective radio frequency signals transmitted by the first radio 12. This can be ensured since the signal bandwidth of the signal to be used for communication is automatically determined by processing the initial signal pattern 16 used in the initialization sub-mode during the establishment of the communication between both radios 12, 14.

In general, the transmit mode comprises an initialization sub-mode in which the initial signal pattern 16 is transmitted as well as a content sub-mode in which content 20 is transmitted via the communication established, in particular once the initialization of the radio communication system 10 has been completed, namely the second radio 14 has set its receiving parameters appropriately.

At the beginning of each communication, the respective communication between both radios 12, 14 has to be initialized wherein this is done by the initial signal pattern 16 that is transmitted, received and processed appropriately.

As described above, the second radio 14, namely the receiving radio, is configured to derive information from the initial signal pattern 16 so as to obtain information with regard to the transmitting characteristics of the transmitting radio, namely the first radio 12.

Furthermore, the second radio 14 may also be configured to derive a content from the initial signal pattern 16. Thus, the first radio 12 may also transmit content during the initialization sub-mode.

However, at least the radio frequency characteristic derived from the initial signal pattern 16 is different to any content of the initial signal pattern 16.

For instance, the second radio 14 is configured to analyze a waveform of the initial signal pattern 16 so as to obtain the information with regard to the signal bandwidth from the initial signal pattern 16.

In addition, at least one of both radios 12, 14 may comprise a software-defined waveform platform 22 that ensures to use different waveforms. In the shown embodiment, the first radio 12 has the software-defined waveform platform 22 wherein the software-defined waveform platform 22 is a software-defined waveform generation platform.

Accordingly, the waveform used for the initial signal pattern 16 may be adapted by the first radio 12 so as to transmit different initial signal patterns 16 assigned to different radio frequency characteristics depending on the bandwidth intended to be used for the communication.

In general, the radio communication system 10 is configured to automatically detect the signal bandwidth of a signal to be used for communication based on the initial signal pattern 16 that has been transmitted in the initialization sub-mode of the transmit mode.

Accordingly, the radio communication system 10, in particular the second radio 14, namely the receiving radio, is configured to self-adapt or rather auto-set its receiving parameters with regard to the transmitting parameters used by the transmitting radio, namely the first radio 12.

Therefore, it is not necessary that the user of the receiving radio, namely of the second radio 14, has a priori knowledge of the transmitting proprieties of the transmitting radio, namely the first radio 12. For instance, the bandwidth used by the transmitter, namely the first radio 12, is unknown to the user of the second radio 14.

Furthermore, it is not necessary to use protocols like automatic link establishment (ALE) protocols for obtaining the respective information with regard to the intended signal bandwidth so that it is possible to use radios 12, 14 of different manufacturers which do not rely on proprietary protocols.

## Claims

1. A radio communication system (10), comprising at least a first radio (12) and a second radio (14), both radios (12, 14) being configured to communicate with each other, wherein the radio communication system (10) has a transmit mode in which an initial signal pattern (16) is transmitted at the beginning of each communication via the first radio (12), wherein the radio communication system (10) has a receive mode in which the initial signal pattern (16) is received by the second radio (14), and wherein the second radio (14) is configured to derive at least one communication channel parameter and a radio frequency characteristic from the initial signal pattern (16).

2. The radio communication system (10) according to claim 1, wherein the second radio (14) is configured to adjust its receiving parameters based on the radio frequency characteristic and/or the at least one communication channel parameter derived from the initial signal pattern (16).

3. The radio communication system (10) according to claim 1 or 2, wherein the transmit mode comprises an initialization sub-mode in which the initial signal pattern (16) is transmitted and a content sub-mode in which content (20) is transmitted, in particular wherein the initial signal pattern (16) is assigned to an initialization of the communication between both radios (12, 14).

4. The radio communication system (10) according to any of the preceding claims, wherein the radio frequency characteristic derived from the initial signal pattern (16) is different to content.

5. The radio communication system (10) according to any of the preceding claims, wherein the radio frequency characteristic derived from the initial signal pattern (16) transmitted is assigned to a signal bandwidth, in particular wherein the signal bandwidth corresponds to the signal bandwidth of a signal to be used for communication.

6. The radio communication system (10) according to any of the preceding claims, wherein the second radio (14) is also configured to derive a content from the initial signal pattern (16).

7. The radio communication system (10) according to any of the preceding claims, wherein at least the second radio (14) is configured to analyze a waveform of the initial signal pattern (16).

8. The radio communication system (10) according to any of the preceding claims, wherein at least one of both radios (12, 14) comprises a software-defined waveform platform (22).

9. The radio communication system (10) according to any of the preceding claims, wherein at least one of both radios (12, 14) is enabled to be operated in the transmit mode and the receive mode, in particular wherein at least one of both radios (12, 14) is a transceiver.

10. The radio communication system (10) according to any of the preceding claims, wherein the radio communication system (10) is configured to automatically detect a signal bandwidth of a signal to be used for communication based on the initial signal pattern (16).

11. A method for determining a radio frequency characteristic of a signal to be used for communication in a radio communication system (10), with the following steps:
- Transmitting via a first radio (12) of the radio communication system (10) an initial signal pattern (16) at the beginning of each communication,
- Receiving the initial signal pattern (16) via a second radio (14) of the radio communication system (10),
- Processing the initial signal pattern (16) received by the second radio (14), and
- Determining at least one communication channel parameter and a radio frequency characteristic from the initial signal pattern (16).

12. The method according to claim 11, wherein the initial signal pattern (16) is transmitted prior to transmitting content (20) so that the initial signal pattern (16) is used for initializing the communication.

13. The method according to claim 11 or 12, wherein the radio frequency characteristic determined from the initial signal pattern (16) is assigned to a signal bandwidth, in particular a signal bandwidth of a signal to be used for communication.

14. The method according to any of claims 11 to 13, wherein the signal bandwidth of a signal to be used for communication is automatically detected by processing the initial signal pattern (16).
